# FASCICULE DE BREVET EUROPEEN

(11) **EP 4 028 236 B1**
(45) Date de publication et mention de la délivrance du brevet: **12.07.2023**
(21) Numéro de dépôt: 20767815.2
(22) Date de dépôt: 09.09.2020
(51) Int. Cl.: B29C 49/06, B29C 49/78, H02K 41/035, B29C 49/12

(54) **DISPOSITIF D'ÉTIRAGE ET BLOC DE BOBINAGE D'UN TEL DISPOSITIF D'ÉTIRAGE**
DEHNVORRICHTUNG UND WICKELEINHEIT EINER DERARTIGEN DEHNVORRICHTUNG
STRETCHING DEVICE AND WINDING UNIT OF SUCH A STRETCHING DEVICE

(30) Priorité: 10.09.2019 FR 1909943
(43) Date de publication de la demande: 20.07.2022
(73) Titulaire: Sidel Participations, 76930 Octeville-sur-Mer (FR)
(72) Inventeur: BRACHET, Vincent, 76930 OCTEVILLE SUR MER (FR)
(74) Mandataire: Sidel Group
(86) Numéro de dépôt international: PCT/EP2020/075165
(87) Numéro de publication internationale: WO 2021/048183

(56) Documents cités:
- FR-A1- 2 943 941
- US-B2- 9 114 559

## Description

La présente invention entre dans le domaine de la fabrication par étirage-soufflage de récipient.

Un tel récipient peut être un flacon ou une bouteille, en matériau plastique, rigide ou semi-rigide. Un tel récipient est destiné à contenir, de façon non exhaustive, un fluide, un liquide, des poudres ou des granulés, notamment de type agroalimentaire ou cosmétique. Un récipient peut présenter tout type de forme, symétrique ou non, régulière ou irrégulière.

De manière connue, la fabrication de récipients en matériau plastique, tels des flacons ou bouteilles, peut s'effectuer au cours d'une opération de mise en forme par soufflage de préformes. Ces préformes sont en matériau plastique, obtenues au préalable par une opération d'injection. Elles présentent une forme oblongue en tube, comprenant une extrémité supérieure ouverte. Chaque préforme s'apparente globalement à un tube à essai, surmonté du goulot du futur récipient qu'elle constituera après soufflage. Plus précisément, la fabrication par soufflage peut faire intervenir une étape d'étirage-soufflage, au cours de laquelle, une tige mobile verticalement pénètre dans une préforme enfermée hermétiquement dans un moule et descend au fur et à mesure du soufflage jusqu'à obtenir le récipient.

Pour ce faire, l'invention concerne un dispositif d'étirage comprenant une console, servant de structure portante fixe, à un support monté mobile par rapport à ladite console. Plus précisément, le support coulisse verticalement par rapport à ladite console, entraîné sous l'action de moyens de déplacement. Un tel support est généralement appelé « coulisseau ».

La tige est montée sur ledit support mobile, de sorte que les courses contrôlées dudit support, permettent la descente de ladite tige au cours de l'étirage-soufflage, puis sa remontée une fois le récipient soufflé.

Une solution connue de dispositif d'étirage est décrite dans le document FR 2 943 941.

Actuellement, il existe de nombreux types de motorisation des moyens de déplacement du support mobile, comme une motorisation de type moteur linéaire. Rappelons qu'un moteur linéaire est un moteur électrique dont chaque rotor et chaque stator sont déroulés, notamment à plat ; le moteur linéaire génère une force de déplacement notamment en translation d'au moins un rotor par rapport au stator. Plus précisément, des bobines peuvent être couplées en vis-à-vis d'une voie d'aimants permanents, de sorte que la mise en circulation d'un courant au sein desdites bobines permet de créer un champ magnétique appliquant un déplacement relatif desdits aimants par rapport auxdites bobines. En particulier, dans le cas présent, pour chaque couple, les bobines recevant le courant au travers d'un câblage électrique, elles sont montées solidaires de la console, tandis que les aimants sont fixés au coulisseau mobile, cette configuration assurant alors le déplacement des aimants du coulisseau mobile par rapport aux bobines de la console fixe.

L'invention trouvera une application visant un déplacement du coulisseau par rapport à la console au travers d'une telle motorisation de type linéaire.

Actuellement, une solution d'implantation des voies d'aimants et des bobines induit une configuration spécifique du dispositif d'étirage, en particulier de la console recevant les bobines et du coulisseau recevant les aimants.

L'état de l'art le plus proche est décrit dans le préambule de la revendication 1.

D'une part, ladite console présente une section globalement en U, dont les branches latérales reçoivent sur leur face intérieure des bobines. D'autre part, le coulisseau est inséré et coulisse à l'intérieur de la console, entre ses branches. Dès lors, les voies d'aimants sont fixées le long des parois latérales externes dudit coulisseau, de manière à coopérer avec les bobines situées en vis-à-vis sur la console.

En outre, le coulisseau peut présenter lui aussi une section globalement en U, inversée par rapport à ladite console, de manière à s'insérer de part et d'autre d'un moyen de guidage, notamment sous forme de rail vertical fixé dans le fond de ladite console, entre ses branches.

Par ailleurs, on notera que le positionnement latéral du coulisseau, entre les voies d'aimants et les bobines, est actuellement ajusté au moment de la fixation par collage des aimants, opération manifestement empirique et fastidieuse.

De façon connexe, la tige ou d'autres composants peuvent être assujettis au support au niveau de la face opposée à la console et par rapport au moyen de guidage.

Par ailleurs, pour des questions d'équilibrage, le coulisseau est centré le long d'un plan médian vertical de ladite console, avec une répartition symétrique de chaque couple de bobines et voies d'aimants de part et d'autre dudit plan médian. Cette symétrie permet de compenser les efforts latéraux, à savoir gauche-droite, s'annulant l'un l'autre.

Une telle configuration induit plusieurs inconvénients, en raison des contraintes mécaniques et électromagnétiques subies par les structures. En particulier, afin de compenser les vibrations provenant de la résonance des bobines, les branches de la console sont renforcées, alourdissant sa structure. De surcroît, le matériau métallique de la structure doit être dimensionné, notamment en épaisseur, afin de limiter toute incidence sur le champ magnétique généré par les bobines.

En outre, le guidage en opposition avec la tige crée un porte-à-faux du coulisseau au moment de son insertion et lors de la descente de la tige, générant des contraintes mécaniques préjudiciables à la longévité du dispositif et diminuant d'autant la précision de ces étapes lors de la fabrication d'un récipient.

Par ailleurs, afin d'être alimentées en courant, les bobines doivent être câblées, nécessitant au moins un faisceau de câbles pour une ou plusieurs bobines de chaque branche de la console.

De façon connexe, la supervision des déplacements du coulisseau le long de la console est déterminé par la détection de la position des aimants par rapport aux bobines. Cette détection s'effectue par un codeur, notamment optique, positionné sur la console en vis-à-vis d'une voie d'aimants du coulisseau. Ce positionnement génère un encrassement du codeur, provenant notamment de dépôts de graisse nécessaire à la lubrification des différents organes. Il est alors nécessaire de nettoyer régulièrement ce codeur, provoquant des opérations de maintenance répétées et diminuant d'autant le rendement de la production.

En outre, un tel codeur doit lui aussi être câblé.

L'invention a pour but de pallier les inconvénients de l'état de la technique en proposant une configuration spécifique des composants de la motorisation de type moteur linéaire des moyens de déplacement du coulisseau par rapport à la console. Pour ce faire, selon l'invention, le dispositif d'étirage comprend au moins :
- une console et un support monté mobile par rapport à ladite console ;
- au moins une tige d'étirage, solidaire dudit support ;
- des moyens de déplacement vertical dudit support le long de ladite console, lesdits moyens de déplacement comprenant au moins deux motorisations linéaires, chaque motorisation linéaire étant pourvu d'une bobine et d'une voie d'aimants se faisant face l'une à l'autre ;
- chaque bobine étant solidaire de ladite console, chaque voie d'aimants étant solidaire dudit support ;
- lesdits bobines de chaque motorisation linéaire et/ou les voies d'aimants de chaque motorisation linéaire s'étendant symétriquement de part et d'autre d'un plan médian vertical de ladite console ;

Un tel dispositif d'étirage se caractérise par le fait que
   - lesdites bobines sont montées au centre de ladite console le long et de part et d'autre dudit plan médian vertical ;
et par le fait que
   - ledit support présente une section en U avec deux branches latérales ;
   - chaque voie d'aimants est solidaire de la paroi intérieure d'une desdites deux branches latérales dudit support.

Dès lors, une telle implantation centrale des bobines peut permettre de simplifier la structure de la console, notamment en s'affranchissant de ses branches latérales, supprimant alors toute résolution des contraintes liées aux vibrations aux niveaux des branches latérales. Cette configuration allège considérablement le dispositif d'étirage et diminue d'autant son coût de fabrication. Elle facilite aussi grandement les opérations de maintenance, simplifiant le montage et les pièces à déposer en cas d'entretien ou de remplacement.

De plus, le positionnement central des bobines permet de simplifier leur câblage, notamment directement par le fond de la console.

Selon des caractéristiques additionnelles, non limitatives, lesdites bobines peuvent être solidaires d'un châssis, formant un bloc de bobinage.

Ledit bloc de bobinage peut être positionné au moins en partie entre lesdites branches latérales dudit support.

Ledit dispositif d'étirage peut comprendre des moyens de fixation de ladite console avec une paroi arrière dudit bloc de bobinage, ladite paroi arrière étant située à l'opposée dudit support.

Ledit dispositif d'étirage peut comprendre des moyens de guidage longitudinal dudit support le long de ladite console, lesdits moyens de guidage comprenant au moins un rail solidaire dudit support et au moins une coulisse solidaire de ladite console au niveau de l'avant dudit bloc de bobinage.

En outre, le positionnement du moyen de guidage à l'avant, au plus près de l'axe vertical passant par la tige, diminue d'autant le porte-à-faux et les contraintes mécaniques générées lors des déplacements du coulisseau, en particulier au cours de la descente de ladite tige en vue de l'étirage.

L'invention concerne aussi un bloc de bobinage de motorisation linéaire pour un tel dispositif d'étirage.

En particulier, ledit bloc de bobinage comprend un châssis supportant au moins deux bobines, caractérisé par le fait que :
- ledit châssis présente une forme parallélépipédique rectangle avec des parois latérales verticales ;
- chaque bobine est solidarisée de chacune desdites parois latérales verticales.

En outre, un tel unique bloc de bobinage permet de simplifier le câblage, au travers d'un unique faisceau de câbles. De plus, ce bloc peut être aisément remplacé en cas de besoin.

Selon des caractéristiques additionnelles, non limitatives, ledit châssis peut intégrer au moins un codeur de position.

En outre, le codeur intégré à l'intérieur d'un tel bloc de bobinage se retrouve protégé, ne nécessitant plus de nettoyage récurrent. Un tel codeur peut être préréglé, facilitant son remplacement. De plus, son câblage peut être simplifié, notamment directement au sein du faisceau de connexion du bloc de bobinage.

D'autres caractéristiques et avantages de l'invention ressortiront de la description détaillée qui va suivre des modes de réalisation non limitatifs de l'invention, en référence aux figures annexées, dans lesquelles :
[Fig. 1] représente schématiquement une vue en perspective d'un premier mode de réalisation d'un dispositif d'étirage ;
[Fig. 2] représente schématiquement une vue avant d'un autre mode de réalisation ;
[Fig. 3] représente schématiquement une vue en coupe verticale médiane selon le plan A-A' de la figure 2 ;
[Fig. 4] représente schématiquement une vue de dessus d'un détail de la figure 1 ;
[Fig. 5] représente schématiquement une vue grossie d'un détail d'un autre mode de réalisation ;
[Fig. 6] représenté schématiquement une vue en perspective avant d'un mode de réalisation d'un bloc de bobinage ; et
[Fig. 7] représenté schématiquement une vue en perspective arrière du mode de réalisation du bloc de bobinage de la figure 6, montrant notamment le codeur de position intégré à une paroi latérale en partie basse du châssis dudit bloc de bobinage. La présente invention concerne la fabrication par étirage-soufflage de récipient.

Un tel récipient peut être un flacon ou une bouteille, en matériau plastique, rigide ou semi-rigide. Un tel récipient est destiné à contenir, de façon non exhaustive, un fluide, un liquide, des poudres ou des granulés, notamment de type agroalimentaire ou cosmétique. Un récipient peut présenter tout type de forme, symétrique ou non, régulière ou irrégulière.

Comme évoqué précédemment, la fabrication de récipients en matériau plastique, tels des flacons ou bouteilles, peut s'effectuer au cours d'une opération de mise en forme par soufflage de préformes. Plus précisément, la fabrication par soufflage peut faire intervenir une étape d'étirage-soufflage.

Ainsi, l'invention concerne un dispositif 1 d'étirage.

Un tel dispositif 1 d'étirage comprend au moins une console 2. Une telle console 2 est fixe, solidaire d'un bâti, notamment d'un autre module, comme un carrousel de soufflage. Ladite console 2 sert de structure porteuse à d'autres composants, comme par exemple un boîtier 3 de commande.

Selon un mode préféré de réalisation, un tel boîtier est monté en face arrière de ladite console 2. Le boîtier 3 enferme notamment une unité de contrôle, gérant le fonctionnement du dispositif 1 d'étirage, en particulier les déplacements de certains composants. Une telle unité de contrôle est reliée à un poste central, généralement déporté, supervisant le fonctionnement des différents modules présents dans la ligne de production, y compris ledit dispositif 1 d'étirage. En outre, l'unité de contrôle et ledit poste central peuvent être informatisés, possédant des interfaces homme-machine dédiées.

De plus, ledit dispositif 1 d'étirage comprend un support 4, aussi appelé « coulisseau ». Ledit support 4 est monté mobile par rapport à ladite console 2.

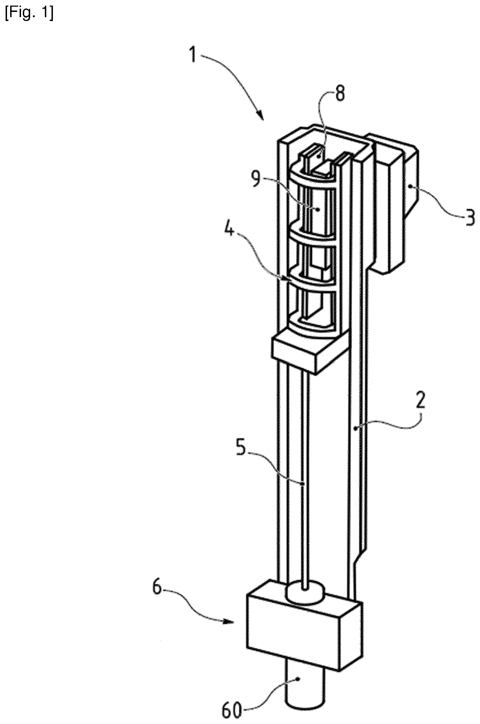

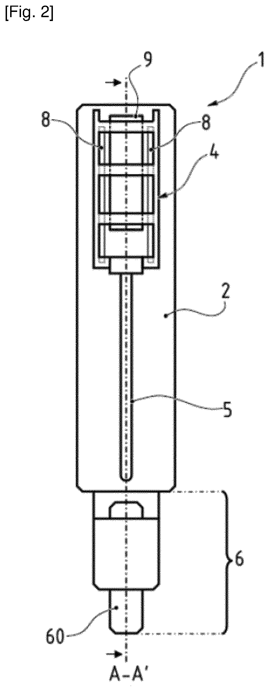

Comme visible sur les figures 1 à 3, un tel support 4 est monté au niveau de la face avant de ladite console 2. Plus avant, le déplacement s'effectue en translation selon une direction de déplacement verticale, vers le bas ou vers le haut, depuis une position haute vers une position basse, et inversement, via des positions intermédiaires.

Ces déplacements du support 4 permettent notamment d'effectuer l'opération d'étirage au moment du soufflage.

A ce titre, ledit support 4 comprend au moins une tige 5 d'étirage. Le support 4 peut comprendre d'autres composants.

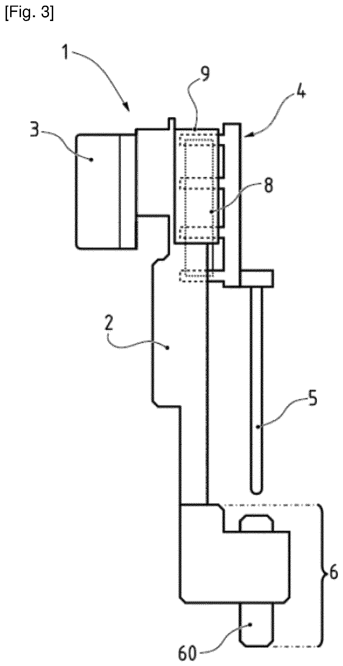

Cette tige 5 d'étirage est solidaire en face avant dudit support 4, comme notamment visible sur la figure 3.

Une telle tige 5 peut se présenter sous forme d'une barre pleine ou pourvue de canaux alimentés en air sous pression.

De façon connexe, lors du déplacement descendant du support 4, la tige 5 est entraînée conjointement vers le bas, pénétrant dans une préforme enfermée au sein d'un module 6 de soufflage situé en partie basse du dispositif 1 d'étirage et coopérant avec un moule d'un autre module, comme un carrousel de soufflage. En outre, un tel module 6 de soufflage peut être monté sur ladite console 2 et peut comprendre au moins une tuyère 60, comme notamment visible sur les figures 1 et 3. Une telle tuyère 60 présente globalement une forme en cloche, venant recouvrir la préforme enfermée dans le moule et assurer une jonction étanche avec la paroi supérieure dudit moule. La tuyère 60 est conformée pour permettre à la tige 5 d'étirage de s'y introduire par le haut, pour pénétrer à l'intérieur de la préforme et venir au contact intérieurement de sa paroi inférieure, à savoir son fond, au moment du soufflage, pour effectuer l'opération d'étirage en appliquant une poussée descendante sous l'effet du mouvement descendant de ladite tige 5 généré par le déplacement du support 4.

A ce titre, le dispositif 1 d'étirage comprend des moyens de déplacement vertical dudit support 4 le long de ladite console 2. Les moyens de déplacement forment notamment une motorisation, contrôlée par ladite unité dans le boîtier 3 de commande.

Dans le cadre de la présente invention, ladite motorisation est de type linéaire, à savoir qu'elle constitue un moteur linéaire.

Comme évoqué précédemment, un moteur linéaire est un moteur électrique dont chaque rotor et chaque stator sont déroulés, notamment à plat ; le moteur linéaire génère une force de déplacement notamment en translation d'au moins un rotor par rapport au stator. Plus précisément, des bobines 7 peuvent être couplées en vis-à-vis d'une voie 8 d'aimants ou « aimants 8 » permanents, de sorte que la mise en circulation d'un courant au sein desdites bobines 7 permet de créer un champ magnétique appliquant un déplacement relatif desdits aimants 8 par rapport auxdites bobines 7. Autrement dit, chaque motorisation linéaire est constitué d'un couple d'organes, dont l'un est une bobine 7 et l'autre est une voie d'aimants 8.

En particulier, dans le cas présent, pour chaque motorisation linéaire, les bobines 7 recevant le courant au travers d'un câblage électrique, elles sont montées solidaires de la console 2, tandis que les aimants 8 sont fixés au support 4, cette configuration assurant alors le déplacement des aimants 8 du support 4 mobile par rapport aux bobines 7 de la console 2 fixe.

Dès lors, lesdits moyens de déplacement comprennent au moins deux motorisations linéaires, chaque motorisation linéaire étant pourvu d'une bobine 7 et d'une voie d'aimants 8 se faisant face, formant une motorisation linéaire. De plus, chaque bobine 7 est solidaire de ladite console 2, tandis que chaque voie d'aimants 8 est solidaire dudit support 4.

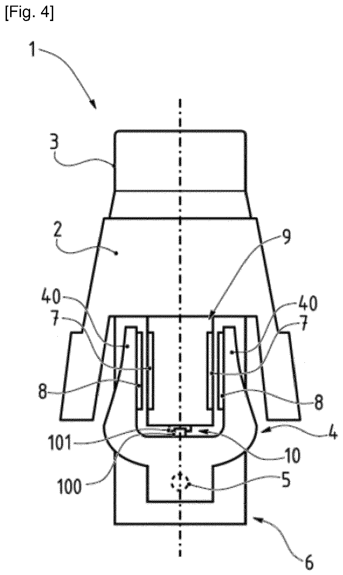

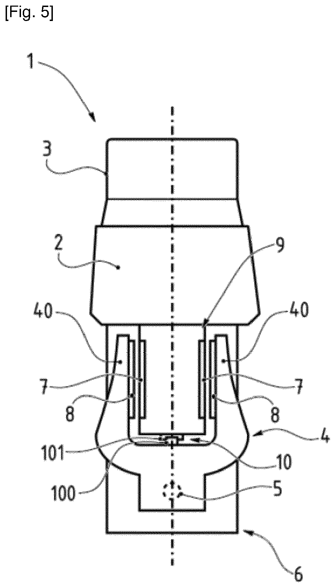

Plus avant, afin d'assurer le déplacement vertical du support 4, de façon équilibrée et rectiligne, en limitant les contraintes parasites, notamment transversalement à la direction de déplacement, lesdits couples s'étendent par deux symétriquement de part et d'autre d'un plan médian vertical de ladite console 2. Un tel plan médian vertical est notamment représenté sur les figures 4 et 5.

En somme, une première motorisation linéaire constituée de bobines 7 et d'aimants 8 est située à gauche, tandis qu'une deuxième motorisation linéaire constituée de bobines 7 et d'aimants 8 est situé à droite, s'étendant symétriquement de chaque côté dudit plan médian vertical.

Avantageusement, l'invention prévoit d'implanter spécifiquement les couples de bobines 7 et d'aimants 8, afin d'améliorer la motorisation linéaire qui en résulte, en simplifiant notamment la structure de la console 2, s'affranchissant de certains parasites vibratoires dus aux forces électromagnétiques provenant de ladite motorisation linéaire.

Pour ce faire, lesdites bobines 7 sont montées au centre de ladite console 2 de part et d'autre le long dudit plan médian vertical.

En positionnant les bobines 7 de façon centrale, plutôt que de part et d'autre à l'extérieur du coulisseau, permet notamment modifier la forme de la console 2, qui n'est plus en U, s'affranchissant alors de parois latérales susceptibles d'interagir en raisonnement avec les forces électromagnétiques. Un tel mode de réalisation de la console 2 sans paroi latérale est notamment visible sur la figure 5.

On notera que, du fait de positionner au centre les bobines, il est alors possible de partager une ou plusieurs bobines 7 avec les voies 8 d'aimants situées de part et d'autre.

De surcroît, le support 4 présente une section en U avec deux branches 40 latérales. Le support 4 présente donc une forme concave, avec un creux orienté vers ladite console 2, à savoir vers l'arrière. Dès lors, avantageusement, chaque voie 8 d'aimants est solidaire de la paroi intérieure d'une desdites deux branches 40 latérales dudit support 4.

Dans cette configuration, le support 4 entoure les bobines 7, avec les voies 8 d'aimants situées de part et d'autre desdits bobines 7, à l'intérieur dudit support 4. Plus avant, selon le mode préférentiel de réalisation, afin de faciliter la conception mais aussi les interventions de maintenance aux niveaux des bobines 7, l'invention prévoit de les incorporer dans un bloc indépendant, dit « bloc 9 de bobinage ».

Ainsi, lesdites bobines 7 sont solidaires d'un châssis 90. L'ensemble dudit châssis 90 et des bobines 7 forme alors ledit bloc 9 de bobinage. En d'autres termes, le bloc 9 de bobinage comprend un châssis 90 qui supporte au moins deux bobines 7.

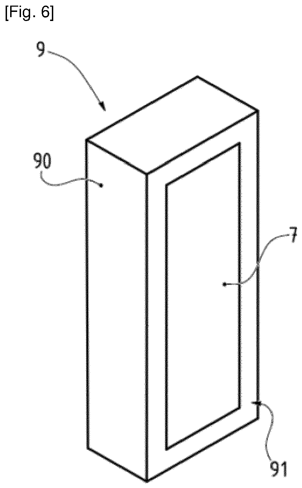

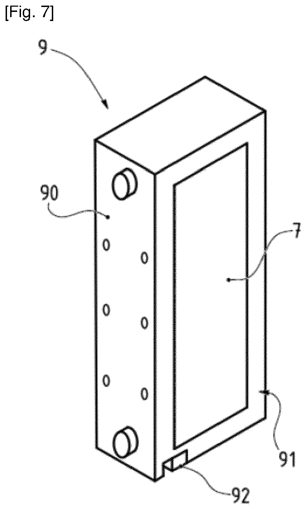

Selon le mode de réalisation, notamment visible sur les figures 6 et 7, ledit châssis 90 présente une forme parallélépipédique rectangle avec des parois 91 latérales verticales. Dès lors, chaque bobine 7 est solidarisée de chacune desdites parois 91 latérales verticales. En d'autres termes, chaque bobine 7 d'une première motorisation linéaire est montée sur une desdites parois 91 du bloc 9 de bobinage, gauche ou droite, tandis que chaque bobine 7 d'une deuxième motorisation linéaire est montée sur l'autre desdites parois 91 du bloc 9 de bobinage, respectivement droite ou gauche. Il n'est alors plus nécessaire d'ajuster la fixation des bobines 7, faisant partie intégrante dudit bloc 9 de bobinage, rapporté directement sur la console 2.

A ce titre, le bloc 9 de bobinage peut être assujetti de toutes les façons sur la console 2. Selon un mode préféré de réalisation, le dispositif 1 d'étirage comprend des moyens de fixation de ladite console 2 avec une paroi arrière dudit bloc 9 de bobinage. On notera que ladite paroi arrière est située à l'opposée dudit support 4. En d'autres termes, la paroi arrière du bloc 9 de bobinage vient au contact de la paroi intérieure de ladite console 2.

Selon un mode préférentiel de réalisation, les moyens de fixation peuvent comprendre des orifices traversants ménagés au travers de l'épaisseur de la paroi de la console 2, en vis-à-vis d'alésages ménagés dans ladite paroi arrière du bloc 9 de bobinage, permettant la coopération de vis traversantes.

En outre, lesdits orifices peuvent être oblongs, afin d'ajuster la hauteur du bloc 9 de bobinage au moment de sa fixation sur la console 2.

Par ailleurs, la console 2 peut comprendre dans sa paroi de fixation avec le bloc 9 de bobinage, des ouvertures ou trous ménagés pour le passage d'au moins un câblage, notamment de commande et d'alimentation électrique, relié audit bloc 9 de bobinage. Un tel câblage est alors relié directement à l'opposé à l'unité de contrôle au sein du boîtier 3 de commande, simplifiant considérablement l'implantation des câbles, ainsi que leur nombre. En effet, toutes les bobines 7 du bloc 9 de bobinage peuvent alors être connectées via le châssis 90 par l'intermédiaire d'un unique faisceau de câbles. Plus avant, le bloc 9 de bobinage peut être équipé d'un codeur 92 de position. Un tel codeur 92 permet de détecter la position des aimants 8, assurant la commande précise du déplacement du support 4 par rapport à la console 2. Un tel codeur 92 peut comprendre un capteur optique, mais préférentiellement est de type à « effet hall » permettant de mesurer une variation de champ magnétique au passe des aimants 8 en vis-à-vis dudit codeur 92, ce type de codeur à effet hall étant notamment insensible aux dépôts graisseux.

Selon le mode préféré de réalisation, comme visible notamment sur la figure 7, ledit châssis 90 intègre au moins ledit un codeur 92 de position. En particulier, ledit codeur 92 peut être située en partie inférieure dudit châssis 90, au niveau d'une de ses parois latérales 91. Le codeur 92 peut alors présenter son champ de détection orienté transversalement par rapport à la direction de déplacement du support 4, à savoir sensiblement horizontalement ou horizontalement et tourné vers les aimants 8. Un tel codeur 92 peut éventuellement être directement rattaché à la console 2, notamment au niveau de sa paroi de fixation avec ledit bloc 9 de bobinage. Le codeur 92 fait alors partie du dispositif 1 d'étirage.

Ainsi, la fixation du bloc 9 de bobinage et l'intégration du codeur 92 permet notamment d'obtenir un préréglage dudit bloc 9, sans avoir à ajuster la position du support 4 lors de sa mise en place ou sa remise en place après dépose, notamment pour remplacement ou maintenance.

En outre, comme évoqué précédemment, le bloc 9 de bobinage se retrouve centré sur le plan médian de la console 2, encadre par les branches 40 latérales du support 4. En somme, une fois mis en place et fixé dans le dispositif 1 d'étirage, le ledit bloc 9 de bobinage est positionné au moins en partie entre lesdites branches 40 latérales dudit support 4.

L'invention concerne donc un tel bloc 9 de bobinage de motorisation linéaire spécialement dédié au dispositif 1 d'étirage. Toute ou partie des éléments d'un tel bloc 9 de bobinage peuvent être compris dans le dispositif 1 d'étirage.

Selon un mode de réalisation préféré, comme visible notamment sur la figure 4, l'invention prévoit de compléter les déplacements du support 4 en le guidant le long de la console 2.

Pour ce faire, le dispositif 1 d'étirage peut comprendre des moyens 10 de guidage longitudinal dudit support 4 le long de ladite console 2. En d'autres termes, lesdits moyens 10 de guidage assurent un déplacement vertical et rectiligne du support 4 du haut vers le bas, ou inversement, par rapport à ladite console 2.

Préférentiellement, lesdits moyens 10 de guidage comprennent au moins un rail 100 solidaire dudit support 4 et au moins une coulisse 101 solidaire de ladite console 2. Ledit rail 100 et la coulisse 101 sont conformés complémentairement pour coopérer ensemble en coulissement, roulement ou glissement. Le rail 100 et la coulisse 101 s'étendent donc verticalement.

En particulier, ladite coulisse 101 peut être solidaire au niveau de l'avant dudit bloc 9 de bobinage. La coulisse 101 se retrouve alors fixée audit bloc 9 ou bien à la console 2, notamment avec des parties de sa structure encadrant le bloc 9 de bobinage par le dessus et/ou le dessous.

En outre, le rail 100 peut alors être solidaire de la paroi intérieure du support 4, située entre ses branche 40 latérales. Le rail 100 est alors centré sur ledit plan médian de la console 2, assurant notamment un positionnement précis dudit support 4 lors de son montage sur ladite console 2.

D'autres moyens 10 de guidage peuvent être envisagés, comme des roulements ou galets, coopérant avec des rainures ou analogues.

Ainsi, le positionnement des moyens 10 de guidage au plus près de l'extérieur du support 4, permettent de limiter le porte-à-faux lors des déplacements en insertion et en poussée de la tige 5 d'étirage au sein de la préforme et de diminuer les contraintes appliquées audit support 4 au moment du soufflage.

Le dispositif 1 d'étirage selon l'invention, ainsi que son bloc 9 de bobinage centré selon le plan médian vertical de la console 2, permet de simplifier considérablement l'installation, en particulier la structure de ladite console 2, diminuant notamment les coûts de fabrication mais aussi le temps pour les opérations de maintenance.

## Revendications

1. Dispositif (1) d'étirage, comprenant au moins :
- une console (2) et un support (4) monté mobile par rapport à ladite console (2) ;
- au moins une tige (5) d'étirage, solidaire dudit support (4) ;
- des moyens de déplacement vertical dudit support (4) le long de ladite console (2), lesdits moyens de déplacement comprenant au moins deux motorisations linéaires, chaque motorisation linéaire étant pourvu d'une bobine (7) et d'une voie (8) d'aimants se faisant face l'une à l'autre ;
- chaque bobine (7) étant solidaire de ladite console (2), chaque voie (8) d'aimants étant solidaire dudit support (4) ;
- lesdits bobines de chaque motorisation linéaire et/ou les voies d'aimants de chaque motorisation linéaire s'étendant symétriquement de part et d'autre d'un plan médian vertical de ladite console (2) ;
**caractérisé par le fait que**
- lesdites bobines (7) sont montées au centre de ladite console (2) le long et de part et d'autre dudit plan médian vertical ;
et **par le fait que**
- ledit support (4) présente une section en U avec deux branches (40) latérales ;
- chaque voie (8) d'aimants est solidaire de la paroi intérieure d'une desdites deux branches (40) latérales dudit support (4).

2. Dispositif (1) d'étirage selon la revendication précédente, **caractérisé par le fait que** lesdites bobines (7) sont solidaires d'un châssis (90), formant un bloc (9) de bobinage.

3. Dispositif (1) d'étirage selon la revendication précédente, **caractérisé par le fait que** ledit bloc (9) de bobinage est positionné au moins en partie entre lesdites branches (40) latérales dudit support (4).

4. Dispositif (1) d'étirage selon l'une quelconque des revendications 2 ou 3, **caractérisé par le fait qu'**il comprend des moyens de fixation de ladite console (2) avec une paroi arrière dudit bloc (9) de bobinage, ladite paroi arrière étant située à l'opposée dudit support (4).

5. Dispositif (1) d'étirage selon l'une quelconque des revendications 2 à 4, **caractérisé par le fait qu'**il comprend des moyens (10) de guidage longitudinal dudit support (4) le long de ladite console (2), lesdits moyens (10) de guidage comprenant au moins un rail (100) solidaire dudit support (4) et au moins une coulisse (101) solidaire de ladite console (2) au niveau de l'avant dudit bloc (9) de bobinage.

## Patentansprüche

1. Streckvorrichtung (1), die zumindest Folgendes umfasst:
- eine Konsole (2) und einen Träger (4), der in Bezug auf die Konsole (2) beweglich montiert ist;
- mindestens eine Streckstange (5), die fest mit dem Träger (4) verbunden ist;
- Mittel zur vertikalen Bewegung des Trägers (4) entlang der Konsole (2), wobei die Bewegungsmittel mindestens zwei Linearmotoren umfassen, wobei jeder Linearmotor mit einer Spule (7) und einer Magnetbahn (8) versehen ist, die einander gegenüberliegen;
- wobei jede Spule (7) fest mit der Konsole (2) verbunden ist, wobei jede Magnetbahn (8) fest mit dem Träger (4) verbunden ist;
- wobei sich die Spulen jedes Linearmotors und/oder die Magnetbahnen jedes Linearmotors symmetrisch auf beiden Seiten einer vertikalen Mittelebene der Konsole (2) erstrecken;
**dadurch gekennzeichnet, dass**
- die Spulen (7) in der Mitte der Konsole (2) entlang und auf beiden Seiten der vertikalen Mittelebene montiert sind;
und dadurch, dass
- der Träger (4) einen U-förmigen Querschnitt mit zwei seitlichen Schenkeln (40) aufweist;
- jede Magnetbahn (8) fest mit der Innenwand eines der beiden seitlichen Schenkel (40) des Trägers (4) verbunden ist.

2. Streckvorrichtung (1) nach dem vorangehenden Anspruch, **dadurch gekennzeichnet, dass** die Spulen (7) fest mit einem Rahmen (90) verbunden sind, der einen Wickelblock (9) bildet.

3. Streckvorrichtung (1) nach dem vorangehenden Anspruch, **dadurch gekennzeichnet, dass** der Wickelblock (9) zumindest teilweise zwischen den seitlichen Schenkeln (40) des Trägers (4) angeordnet ist.

4. Streckvorrichtung (1) nach einem der Ansprüche 2 oder 3, **dadurch gekennzeichnet, dass** sie Mittel zur Befestigung der Konsole (2) an einer Rückwand des Wickelblocks (9) umfasst, wobei sich die Rückwand auf der gegenüberliegenden Seite des Trägers (4) befindet.

5. Streckvorrichtung (1) nach einem der Ansprüche 2 bis 4, **dadurch gekennzeichnet, dass** sie Mittel (10) zur Längsführung des Trägers (4) entlang der Konsole (2) umfasst, wobei die Führungsmittel (10) mindestens eine fest mit dem Träger (4) verbundene Schiene (100) und mindestens einen fest mit der Konsole (2) verbundenen Schieber (101) im Bereich der Vorderseite des Wickelblocks (9) umfassen.

## Claims

1. Stretching device (1), comprising at least:
- a bracket (2) and a support (4), which is mounted so as to be able to move in relation to the said bracket (2) ;
- at least one stretching rod (5), which is secured to the said support (4);
- means for vertically moving the said support (4) along the said bracket (2), the said movement means comprising at least two linear drives, each linear drive being provided with a coil (7) and a magnet path (8) facing one another;
- each coil (7) being secured to the said bracket (2), each magnet path (8) being secured to the said support (4) ;
- the said coils of each linear drive and/or the magnet paths of each linear drive extending symmetrically on either side of a vertical median plane of the said bracket (2) ;
**characterized in that**
- the said coils (7) are mounted in the centre of the said bracket (2) along and on either side of the said vertical median plane;
and **in that**
- the said support (4) has a U-shaped cross section with two lateral arms (40);
- each magnet path (8) is secured to the inner wall of one of the said two lateral arms (40) of the said support (4) .

2. Stretching device (1) according to the preceding claim, **characterized in that** the said coils (7) are secured to a frame (90), forming a coil block (9).

3. Stretching device (1) according to the preceding claim, **characterized in that** the said coil block (9) is positioned at least partially between the said lateral arms (40) of the said support (4).

4. Stretching device (1) according to either one of Claims 2 and 3, **characterized in that** it comprises means for fastening the said bracket (2) to a rear wall of the said coil block (9), the said rear wall being opposite the said support (4).

5. Stretching device (1) according to any one of Claims 2 to 4, **characterized in that** it comprises means (10) for longitudinally guiding the said support (4) along the said bracket (2), the said guide means (10) comprising at least one rail (100) secured to the said support (4) and at least one guideway (101) secured to the said bracket (2) at the front of the said coil block (9) .
